# EUROPÄISCHE PATENTSCHRIFT

(11) **EP 1 008 471 B1**
(45) Veröffentlichungstag und Bekanntmachung des Hinweises auf die Patenterteilung: **02.07.2003**
(21) Anmeldenummer: 98123258.0
(22) Anmeldetag: 07.12.1998
(51) Int. Cl.: B60H 1/03

(54) **Kühl- und Heizungskreislauf sowie Wärmetauscher für Kraftfahrzeuge mit zusätzlicher Kühlmittel-Heizeinrichtung**
Coolant and heating circulation and heat exchanger for vehicles with additional coolant heater
Circulation de refroidissement et de chauffage et échangeur thérmique pour véhicules avec un dispositif de chauffage du liquide de refroidissement

(43) Veröffentlichungstag der Anmeldung: 14.06.2000
(73) Patentinhaber: Ford Global Technologies, Inc., Dearborn, Michigan 48126 (US)
(72) Erfinder: Himmelsbach, Johann Dr., 51789 Lindlar (DE)
(74) Vertreter: Bonsmann, Manfred, Dipl.-Ing.

(56) Entgegenhaltungen:
- EP-A- 0 467 130
- DE-A- 3 401 207
- US-A- 3 540 651
- US-A- 4 892 248
- PATENT ABSTRACTS OF JAPAN vol. 009, no. 313 (M-437), 10. Dezember 1985 & JP 60 148715 A (FUJI JUKOGYO KK), 6. August 1985

## Beschreibung

Die Erfindung bezieht sich auf einen Kühl- und Heizungskreislauf für Kraftfahrzeuge mit einer durch Kühlmittel gekühlten Brennkraftmaschine, deren Kühlmittel eine Kühlmittel-Heizeinrichtung sowie einen dieser nachgeschalteten Heizungs-Wärmetauscher durchströmt und von einer Kühlmittelpumpe über eine Kühlmittelleitung zur Brennkraftmaschine zurückgefördert wird. Ferner bezieht sich die Erfindung auf einen Heizungs-Wärmetauscher zur Verwendung in solchen Kühl- und Heizungskreisläufen.

Zur Heizung des Fahrgastraumes eines Kraftfahrzeuges wird üblicherweise das zur Kühlung der Brennkraftmaschine verwendete und von dieser erwärmte Kühlmittel zu einem Heizungs-Wärmetauscher geführt, in dem vom Kühlmittel Wärme auf Luft übertragen wird, die dann in den Fahrgastraum eingeleitet wird. Vom Heizungs-Wärmetauscher aus kann das Kühlmittel entweder direkt oder über einen Kühler, der dem Kühlmittel weitere Wärme entzieht, zur Brennkraftmaschine zurückgeleitet werden.

Während der Aufwärmphase der Brennkraftmaschine oder bei extrem kalten Witterungsbedingungen ist die Temperatur des Kühlmittels nicht ausreichend hoch, um ein zufriedenstellendes Heizen des Fahrgastraumes zu ermöglichen, d. h. es liegt ein Fahrgastraum-Heizungsdefizit vor.

Zur Erhöhung der Kühlmitteltemperatur für den Durchlauf durch den Heizungs-Wärmetauscher ist es bekannt, das Kühlmittel nach dem Austritt aus der Brennkraftmaschine durch eine Kühlmittel-Heizeinrichtung zu leiten, ehe es den Heizungs-Wärmetauscher durchläuft. Hierdurch wird zwar eine verbesserte Beheizung des Fahrgastraumes und auch eine Verkürzung der Aufwärmphase der Brennkraftmaschine erzielt, jedoch ist die Heizleistung in der Aufwärmphase immer noch relativ schlecht, da die Kühlmittel-Aufwärmgeschwindigkeit doch überwiegend von der Wärmeträgheit der Brennkraftmaschine bestimmt ist. Das bedeutet, daß das Kühlmittel von der noch kalten Brennkraftmaschine wieder stark abgekühlt wird und daher der Großteil der Energie der Kühlmittel-Heizeinrichtung zum Aufwärmen der Brennkraftmaschine herangezogen wird, und nicht für die Fahrgastraumheizung. Eine Verbesserung der Fahrgastraumheizung durch Erhöhung der Heizleistung der Kühlmittel-Heizeinrichtung ist kostenaufwendig, da weniger als 50% der zusätzlich aufgewandten Energie als Wärme in den Fahrgastraum übertragen werden kann.

Diesbezüglich ist aus der US 4 892 248 ein gattungsgemäßer Kühl- und Heizungskreislauf für ein Kraftfahrzeug bekannt, bei dem ein Teil des von der Brennkraftmaschine kommenden Kühlmittels mit Hilfe einer Kühlmittelpumpe in einem ersten Kühlmittel-Kreislauf über einen Heizungs-Wärmetauscher und von dort zurück zur Brennkraftmaschine gepumpt wird. Ein weiterer Heizungs-Wärmetauscher ist parallel zum erstgenannten Wärmetauscher angeordnet sowie über eine Kühlmittelzuleitung parallel hierzu an den ersten Kühlmittel-Kreislauf angeschlossen. Weiterhin verläuft ein zweiter Kühlmittel-Kreislauf von den Ausgängen der beiden Kühlmittel-Wärmetauscher über eine Hilfskühlmittelpumpe und eine Kühlmittel-Heizeinrichtung zurück zu der Kühlmittelzuleitung des weiteren Wärmetauschers. Der Heizeinrichtung wird daher nur dann Wärme entnommen, wenn die Hilfskühlmittelpumpe aktiv ist.

Demgegenüber liegt die Aufgabe der vorliegenden Erfindung darin, die Fahrgastraumheizung mit geringem Aufwand deutlich zu verbessern, insbesondere beim Kaltstart oder bei ähnlichen Bedingungen, und die effiziente Ausnutzung einer ständig Wärme produzierenden Heizeinrichtung zu ermöglichen.

Diese Aufgabe wird durch einen Kühl- und Heizungskreislauf mit den Merkmalen des Anspruchs 1 gelöst. Vorteilhafte Ausgestaltungen sind in den Unteransprüchen enthalten.

Die Aufgabe wird bei einem Kühl- und Heizungskreislauf der eingangs genannten Art dadurch gelöst, daß zu der Kühlmittel-Heizeinrichtung und dem dieser nachgeschalteten, ersten Heizungs-Wärmetauscher ein zweiter Heizungs-Wärmetauscher parallelgeschaltet ist, von dessen Kühlmittelaustritt aus eine Kühlmittelleitung verläuft, an die zunächst die zur Brennkraftmaschine zurückführende Kühlmittelleitung angeschlossen ist und in die danach der Kühlmittelaustritt des ersten Heizungs-Wärmetauschers einmündet und die dann über eine regelbare Hilfskühlmittelpumpe zum Kühlmitteleintritt der Kühlmittel-Heizeinrichtung führt.

Mit einem erfindungsgemäßen Kühl- und Heizungskreislauf wird kostengünstig eine beträchtliche Verbesserung der Heizung eines Kraftfahrzeug-Fahrgastraumes erzielt. Durch die erfindungsgemäß vorgesehene Hilfskühlmittelpumpe kann in einem ersten Betriebsmodus die überwiegende Menge des aus dem ersten Heizungs-Wärmetauscher austretenden Kühlmittels direkt zur Kühlmittel-Heizeinrichtung zurückgeführt und von dort wieder dem Kühlmitteleintritt des ersten Heizungs-Wärmetauschers zugeleitet werden. Die regelbare Hilfskühlmittelpumpe dient dabei zur Einstellung der gewünschten Kühlmittel-Strömungsrate durch die Kühlmittel-Heizeinrichtung. Die Förderleistung der Hilfskühlmittelpumpe ist dann idealerweise gerade so groß, daß sich in Verbindung mit dem Förderdruck der Kühlmittelpumpe der Brennkraftmaschine die gewünschte Rezirkulationsrate einstellt. Hierdurch wird ein Kreislauf erzeugt, der zu einer intensiven Ausnutzung der Heizleistung der Kühlmittel-Heizeinrichtung führt und in einer sehr effektiven Heizung des Fahrgastraumes resultiert, da nahezu 100% der Energie der Kühlmittel-Heizeinrichtung für die Fahrgastraumheizung genutzt bzw. auf diese konzentriert werden, anstatt die Brennkraftmaschine aufzuheizen. Aufgrund des geringen technischen Aufwandes, es werden nur eine zusätzliche Hilfskühlmittelpumpe, ein zweiter Heizungs-Wärmetauscher sowie einige zusätzliche Kühlmittelanschlüsse benötigt, sind die zusätzlichen Kosten relativ gering. Wenn sich der Kreislauf Hilfskühlmittelpumpe/Kühlmittel-Heizeinrichtung/erster Heizungs-Wärmetauscher stabilisiert hat, was in sehr kurzer Zeit nach dem Start der Brennkraftmaschine, d. h. nach dem Start der Hilfskühlmittelpumpe erfolgt, tritt nur eine geringe Menge des direkt von der Brennkraftmaschine kommenden, aus dem zweiten Heizungs-Wärmetauscher austretenden Kühlmittels in diesen Kreislauf über, so daß Mischungsverluste nur gering sind. Auf diese Weise wird eine weitgehende Zweiteilung des Kühlmittelstroms erzielt, ohne jedoch die Kreisläufe durch den ersten bzw. durch den zweiten Heizungs-Wärmetauscher völlig zu trennen.

Daher bietet ein erfindungsgemäßer Kühl- und Heizungskreislauf auch die Option, in einen zweiten Betriebsmodus umzuschalten, bei dem zusätzliche Wärme in den normalen Kühlmittelkreislauf der Brennkraftmaschine übertragen wird. Dieses bietet sich an, wenn überschüssige Wärme zur Verfügung steht, um die Brennkraftmaschine zur Verbesserung der Kraftstoffsparsamkeit schneller aufzuwärmen. Zusätzlich ist diese Option wichtig, um eine lokale Überhitzung des Kühl- und Heizungskreislaufes zu vermeiden, wenn die Kühlmittel-Heizeinrichtung nicht abgeschaltet werden kann, z.B. wenn sie ein EGR-Kühler oder ein wassergekühlter Wechselstromgenerator ist. Da die durch den ersten und durch den zweiten Heizungs-Wärmetauscher strömenden Kühlmittel-Kreisläufe nicht mechanisch voneinander getrennt sind, strömt in dem zweiten Betriebsmodus bei Abschaltung bzw. bei Einstellung einer entsprechend geringeren Förderleistung der Hilfskühlmittelpumpe die überwiegende Menge des aus dem ersten Heizungs-Wärmetauscher austretenden Kühlmittels gemeinsam mit dem aus dem zweiten Heizungs-Wärmetauscher austretenden Kühlmittel zur Brennkraftmaschine zurück. Dabei strömt das durch den ersten Heizungs-Wärmetauscher laufende Kühlmittel weiterhin durch die Kühlmittel-Heizeinrichtung. In diesem zweiten Betriebsmodus wird die Fahrgastraumheizung reduziert und das Aufwärmen der Brennkraftmaschine bzw. des Schmiermittels beschleunigt. Wichtig ist jedoch, daß Kühlmittel an den Kühlmitteleintritt der Hilfskühlmittelpumpe gelangen kann, um beispielsweise ein konventionelles Kühlsystem mit nur einer Degas-Bottle und nur einem Degas-Pressure-Cap verwenden zu können.

In einer bevorzugten Ausführungsform der Erfindung ist zwischen dem Anschluß der zur Brennkraftmaschine zurückführenden Kühlmittelleitung und der Einmündung des Kühlmittelaustritts des ersten Heizungs-Wärmetauschers ein Rückschlagventil in die Kühlmittelleitung geschaltet, das einen Kühlmittelstrom vom zweiten Heizungs-Wärmetauscher zur Hilfskühlmittelpumpe verhindert. Durch dieses Rückschlagventil wird die Trennung der beiden Kreisläufe durch den ersten bzw. durch den zweiten Heizungs-Wärmetauscher verstärkt, da ein Übertritt des aus dem zweiten Heizungs-Wärmetauscher austretenden Kühlmittels zur Hilfskühlmittelpumpe hin verhindert ist.

Vorteilhafterweise ist zwischen der Hilfskühlmittelpumpe und dem Kühlmitteleintritt der Kühlmittel-Heizeinrichtung ein Rückschlagventil geschaltet, das im Ruhezustand der Hilfskühlmittelpumpe einen Kühlmittelstrom über die Hilfskühlmittelpumpe zu den Heizungs-Wärmetauschern bzw. zur Brennkraftmaschine verhindert. Hierdurch wird ein Kühlmittelstrom bei abgeschalteter Hilfskühlmittelpumpe durch diese hindurch verhindert, so daß das gesamte aus der Brennkraftmaschine austretende Kühlmittel durch entweder den ersten oder durch den zweiten Heizungs-Wärmetauscher strömt und nahezu vollständig zur Brennkraftmaschine zurückgeleitet wird. Nur ein geringer Anteil - wenn überhaupt - fließt vom ersten Heizungs-Wärmetauscher zur Hilfskühlmittelpumpe.

Alternativ wird in weiterer günstiger Fortbildung der Erfindung eine Hilfskühlmittelpumpe eingesetzt, die im Ruhezustand einen hohen Durchflußwiderstand aufweist. Denkbar ist beispielsweise, daß die Hilfskühlmittelpumpe als Zahnradpumpe ausgebildet ist. In dieser Ausführungsform bewirkt die Hilfskühlmittelpumpe im Ruhezustand selbst einen hohen Druckverlust und übernimmt die Funktion des in Reihe mit der Hilfskühlmittelpumpe geschalteten Rückschlagventils.

In einer weiteren vorteilhaften Ausführungsform der Erfindung mündet zwischen der zum zweiten Heizungs-Wärmetauscher führenden Verzweigung und dem Kühlmitteleintritt der Kühlmittel-Heizeinrichtung die von der Hilfskühlmittelpumpe kommende Kühlmittelleitung in die von der Brennkraftmaschine kommende Kühlmittelleitung ein und ist zwischen der besagten Verzweigung und der Einmündung ein Drosselventil geschaltet. Zur Erzielung einer maximalen Fahrgastraumheizung wird dieses Drosselventil geschlossen, so daß der von der Brennkraftmaschine kommende Kühlmittelstrom zur Kühlmittel-Heizeinrichtung unterbrochen ist und sich dieser Kühlmittelstrom erst nach dem zweiten Heizungs-Wärmetauscher an dem Anschluß der zur Brennkraftmaschine zurückführende Kühlmittelleitung teilt. Der von der Brennkraftmaschine kommende und den zweiten Heizungs-Wärmetauscher durchlaufende Kühlmittelstrom teilt sich dort in einen Kühlmittelstrom zur Brennkraftmaschine und in einen Kühlmittelstrom zur Hilfskühlmittelpumpe, der weiter zur Kühlmittel-Heizeinrichtung und dann zum ersten Heizungs-Wärmetauscher geführt wird. Vorteilhaft ist hierbei, daß die Mischungsverluste reduziert werden, da sich sehr schnell ein stabiler Kreislauf Hilfskühlmittelpumpe/Kühlmittel-Heizeinrichtung/erster Heizungs-Wärmetauscher ausbildet, in den dann nur noch sehr wenig aus dem zweiten Heizungs-Wärmetauscher austretendes Kühlmittel eindringt. Soll die Fahrgastraumheizung reduziert werden, wird das Drosselventil geöffnet und die Hilfskühlmittelpumpe, die im Ruhezustand einen hohen Durchflußwiderstand aufweist, abgeschaltet, so daß der aus der Brennkraftmaschine austretende Kühlmittelstrom über die beiden Heizungs-Wärmetauscher zur Brennkraftmaschine zurückströmt.

Alternativ kann zwischen der zum zweiten Heizungs-Wärmetauscher führenden Verzweigung und der Kühlmittel-Heizeinrichtung ein Dreiwege-Ventil vorgesehen sein, dessen erster Einlaß mit der von der Brennkraftmaschine kommenden Kühlmittelleitung, dessen zweiter Einlaß mit der von der Hilfskühlmittelpumpe kommenden Kühlmittelleitung und dessen Auslaß mit dem Kühlmitteleintritt der Kühlmittel-Heizeinrichtung verbunden ist.

Vorzugsweise sind die Ventile elektronisch steuerbar, so daß sie von der Maschinensteuerung in Abhängigkeit vorgegebener Betriebsparameter angesteuert werden können.

Erfindungsgemäß wird auch ein Heizungs-Wärmetauscher zur Verwendung in den vorbeschriebenen Kühl- und Heizungskreisläufen vorgeschlagen. Er umfaßt zwei in einem gemeinsamen Gehäuse angeordnete, nebeneinanderliegende, gegeneinander wärmeisolierte Wärmetauscherkerne mit jeweils ersten und zweiten Enden, wobei das Gehäuse eine erste und eine zweite Öffnung, die jeweils zum ersten Ende eines der Wärmetauscherkerne führen und durch eine Trenneinrichtung voneinander getrennt sind, sowie eine dritte und eine vierte Öffnung aufweist, die jeweils zum zweiten Ende eines der Wärmetauscherkerne führen und durch eine Trenneinrichtung voneinander getrennt sind. Solch ein Heizungs-Wärmetauscher kann wie zwei parallelgeschaltete Heizungs-Wärmetauscher eingesetzt werden. Zwei durch eine Trenneinrichtung getrennte Öffnungen an einem Ende des Gehäuses dienen als Einlässe für jeweils einen Kühlmittelstrom und die zwei anderen durch eine Trenneinrichtung getrennten Öffnungen am anderen Ende des Gehäuses dienen als Auslaß für die beiden Kühlmittelströme.

Die Erfindung wird nachfolgend anhand der Zeichnung beispielshalber noch näher erläutert. Es zeigen:
- Figur 1: eine erste Ausführungsform eines erfindungsgemäßen Kühl- und Heizungskreislaufes;
- Figur 2: eine zweite Ausführungsform eines erfindungsgemäßen Kühl- und Heizungskreislaufes, bei der gegenüber der ersten Ausführungsform zwei Rückschlagventile zusätzlich vorgesehen sind;
- Figur 3: eine dritte Ausführungsform eines erfindungsgemäßen Kühl- und Heizungskreislaufes, bei der zwischen der Verzweigung zum zweiten Heizungs-Wärmetauscher und der Einmündung der von der Hilfskühlmittelpumpe kommenden Kühlmittelleitung ein Drosselventil angeordnet ist;
- Figur 4: eine vierte Ausführungsform eines erfindungsgemäßen Kühl- und Heizungskreislaufes, bei der an der Einmündung der von der Hilfskühlmittelpumpe kommenden Kühlmittelleitung ein Dreiwege-Ventil angeordnet ist, und
- Figur 5: einen erfindungsgemäßen Heizungs-Wärmetauscher.

In den Figuren sind gleiche Elemente mit gleichen Bezugszeichen versehen.

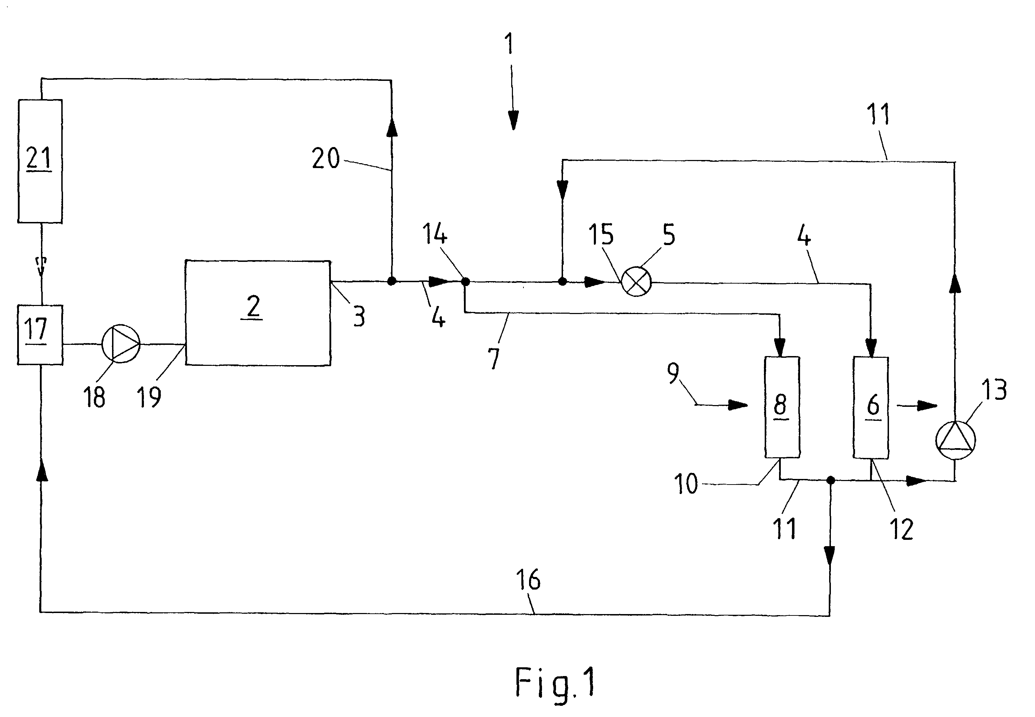

Die in den Figuren 1 bis 4 gezeigten Kühl- und Heizungskreisläufe 1 für Kraftfahrzeuge weisen zunächst eine mit Kühlwasser bzw. Kühlmittel gekühlte Brennkraftmaschine 2 auf. Das in der Brennkraftmaschine 2 zirkulierende Kühlmittel wird zu einem Kühlmittelaustritt 3 geführt, an dem sich eine Kühlmittelleitung 4 anschließt, die zu einer Kühlmittel-Heizeinrichtung 5 und zu einem ersten Heizungs-Wärmetauscher 6 führt.

In Strömungsrichtung vor der Kühlmittel-Heizeinrichtung 5 zweigt eine Kühlmittelleitung 7 ab, die zu einem zweiten Heizungs-Wärmetauscher 8 führt, der zu der Kühlmittel-Heizeinrichtung 5 und dem ersten Heizungs-Wärmetauscher 6 parallelgeschaltet ist. Die beiden Heizungs-Wärmetauscher 6, 8 können gleich ausgeführt sein, d. h. insbesondere die gleiche Heiz-Wirkungsgradkurve aufweisen. Die Heizungsluft 9 wird zuerst durch den zweiten Heizungs-Wärmetauscher 8, dann durch den ersten Heizungs-Wärmetauscher 6 und von dort in den Fahrgastraum geleitet.

An den Kühlmittelaustritt 10 des zweiten Heizungs-Wärmetauschers 8 ist eine Kühlmittelleitung 11 angeschlossen, in die auch der Kühlmittelaustritt 12 des ersten Heizungs-Wärmetauschers 6 mündet und die dann zu einer regelbaren, elektrisch angetriebenen Hilfskühlmittelpumpe 13 und weiter zu der Kühlmittelleitung 4 führt, die die Brennkraftmaschine 2 mit der Kühlmittel-Heizeinrichtung 5 verbindet. In diese Kühlmittelleitung 4 mündet die von der Hilfskühlmittelpumpe 13 kommende Kühlmittelleitung 11 zwischen der zum zweiten Heizungs-Wärmetauscher 8 führenden Abzweigung 14 und dem Kühlmitteleintritt 15 der Kühlmittel-Heizeinrichtung 5 ein. An die zwischen den Kühlmittelaustritten 10, 12 des zweiten und des ersten Heizungs-Wärmetauschers 8, 6 verlaufende Kühlmittelleitung 11 ist eine Kühlmittelleitung 16 angeschlossen, die über ein Thermostat 17 und eine Kühlmittelpumpe 18 zum Kühlmitteleintritt 19 der Brennkraftmaschine 2 zurückführt.

Von der Kühlmittelleitung 4, die von der Brennkraftmaschine 2 zur Kühlmittel-Heizeinrichtung 5 führt, zweigt vor der Verzweigung 14 der Kühlmittelleitung 7 zum zweiten Heizungs-Wärmetauscher 8 eine Kühlmittelleitung 20 zum Kühlmitteleintritt eines Kühler-Wärmetauschers 21 ab, dessen Kühlmittelaustritt mit dem Thermostat 17 verbunden ist. Mit dem Thermostat 17 kann eine Zirkulation des Kühlmittels durch den Kühler-Wärmetauscher 21 verhindert werden.

Durch eine in geeigneter Weise eingestellte bzw. geregelte Förderleistung der Hilfskühlmittelpumpe 13 wird nahezu ein Kreislauf eines Teils des Kühlmittels über die Kühlmittel-Heizeinrichtung 5 und den ersten Heizungs-Wärmetauscher 6 erreicht. Auf diese Weise stellt sich bei dem durch die Hilfskühlmittelpumpe 13 geförderten Kühlmittel aufgrund des wiederholten Durchlaufs durch die Kühlmittel-Heizeinrichtung 5 eine gegenüber einem einmaligen Durchlauf durch die Kühlmittel-Heizeinrichtung 5 beträchtlich erhöhte Temperatur ein, die zu einer signifikanten Verbesserung der Fahrgastraumheizung führt.

Das den zweiten Heizungs-Wärmetauscher 8 durchströmende Kühlmittel läuft nur zu einem geringen Teil zur Hilfskühlmittelpumpe 13, sondern größtenteils durch die Kühlmittelleitung 16 über das Thermostat 17 und die Kühlmittelpumpe 18 zurück zur Brennkraftmaschine 2. Es wird so eine weitgehende Teilung des Kühlmittelstroms in zwei Kreisläufe erreicht, ohne daß hier für aufwendige mechanische Mittel notwendig sind und ohne daß die Kreisläufe mechanisch tatsächlich getrennt sind. Durch eine entsprechende Einstellung der Förderleistung der Hilfskühlmittelpumpe 13 kann die Strömungsrate der Kühlmittelrückführung zur Kühlmittel-Heizeinrichtung 5 den erforderlichen Verhältnissen angepaßt werden, wobei die Strömungsrate jedoch mindestens so hoch sein sollte, daß ein Kühlmittelstrom von der Brennkraftmaschine 2 über die Hilfskühlmittelpumpe 13 zurück zur Brennkraftmaschine 2 verhindert wird.

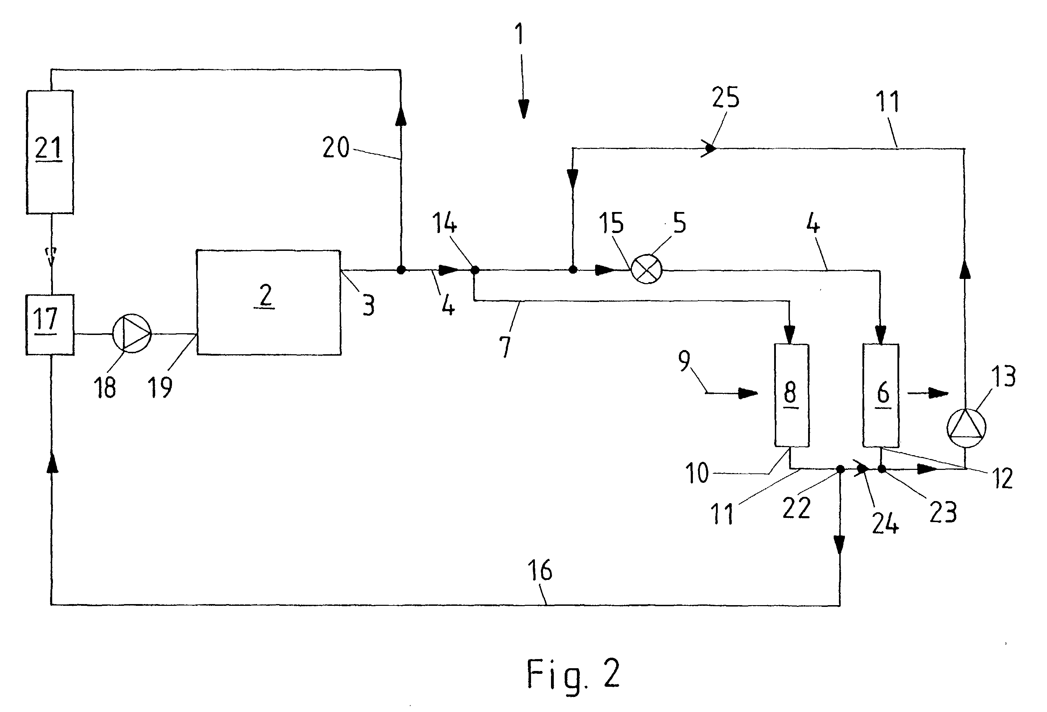

Bei der in Figur 2 dargestellten Ausführungsvariante ist zwischen dem Anschluß 22 der zur Brennkraftmaschine 2 zurückführenden Kühlmittelleitung 16 und der Einmündung 23 des Kühlmittelaustritts 12 des ersten Heizungs-Wärmetauschers 6 in die zur Hilfskühlmittelpumpe 13 führende Kühlmittelleitung 11 ein Rückschlagventil 24 eingesetzt. Dieses Rückschlagventil 24 verhindert einen Kühlmittelstrom vom zweiten Heizungs-Wärmetauscher 8 zur Hilfskühlmittelpumpe 13, so daß das den zweiten Heizungs-Wärmetauscher 8 durchströmende Kühlmittel vollständig zur Brennkraftmaschine 2 zurückströmt. Bei dieser Ausführungsform wird also ausschließlich Kühlmittel, das die Kühlmittel-Heizeinrichtung 5 und den ersten Heizungs-Wärmetauscher 6 durchlaufen hat, zum Kühlmitteleintritt der Kühlmittel-Heizeinrichtung 5 zurückgeführt.

Zwischen der Hilfskühlmittelpumpe 13 und dem Kühlmitteleintritt 15 der Kühlmittel-Heizeinrichtung 5 ist ein zweites Rückschlagventil 25 geschaltet, das einen Kühlmittelstrom von der Brennkraftmaschine 2 zur Hilfskühlmittelpumpe 13 verhindert, wenn die Hilfskühlmittelpumpe 13 vollständig abgeschaltet wird. Bei abgeschalteter Hilfskühlmittelpumpe 13 fließt der überwiegende Teil des den ersten Heizungs-Wärmetauscher 6 durchströmenden Kühlmittels gemeinsam mit dem den zweiten Heizungs-Wärmetauscher 8 durchlaufenden Kühlmittelstrom zur Brennkraftmaschine 2 zurück. Dieser Betriebsmodus mit abgeschalteter Hilfskühlmittelpumpe 13 ist zum beschleunigten Aufwärmen der Brennkraftmaschine 2 bzw. des Schmiermittels bei verringerter Fahrgastraumheizung anwendbar.

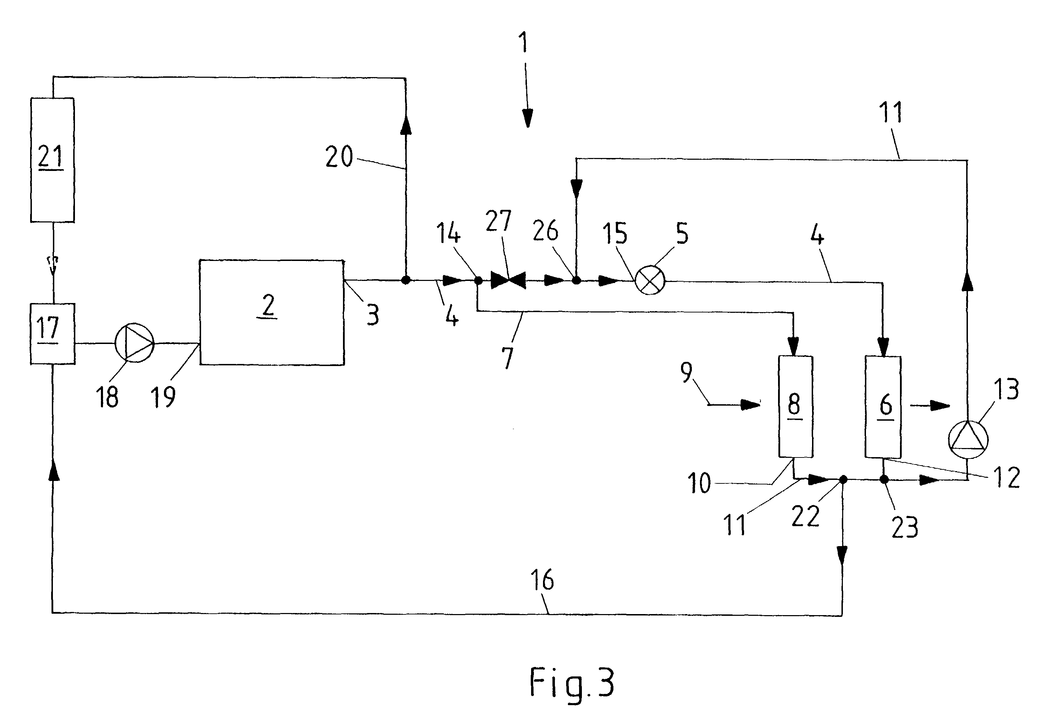

Bei der in Figur 3 dargestellten Ausführungsform ist zwischen der zum zweiten Heizungs-Wärmetauscher 8 führenden Abzweigung 14 von der Kühlmittelleitung 4, die zur Kühlmittel-Heizeinrichtung 5 führt, und der Einmündung 26 der von der Hilfskühlmittelpumpe 13 kommenden Kühlmittelleitung 11 ein Drosselventil 27 angeordnet. Zur Erzielung einer maximalen Fahrgastraumheizung wird dieses Drosselventil 27 geschlossen, so daß der aus der Brennkraftmaschine 2 austretende Kühlmittelstrom zunächst den zweiten Heizungs-Wärmetauscher 8 durchläuft und erst am Anschluß 22 der zur Brennkraftmaschine 2 zurückführenden Kühlmittelleitung 16 in einen Kühlmittelstrom zur Hilfskühlmittelpumpe 13 und in einen Kühlmittelstrom zur Brennkraftmaschine 2 geteilt wird. In sehr kurzer Zeit nach dem Start der Brennkraftmaschine 2 und damit der Hilfskühlmittelpumpe 13 stellt sich hier ein stabiler Kühlmittelkreislauf durch die Kühlmittel-Heizeinrichtung 5 und den ersten Heizungs-Wärmetauscher 6 hindurch ein.

Die Hilfskühlmittelpumpe 13 weist hierbei im Ruhezustand in beiden Richtungen einen hohen Durchflußwiderstand auf und übernimmt auf diese Weise zusätzlich die Funktion des mit ihr in Reihe geschalteten Rückschlagventils 25 aus Figur 2. Beispielsweise kann die Hilfskühlmittelpumpe 13 als Zahnradpumpe ausgebildet sein. Ist eine stärkere Aufwärmung der Brennkraftmaschine 2 gewünscht, wird das Drosselventil 27 geöffnet, so daß sich der aus der Brennkraftmaschine 2 austretende Kühlmittelstrom bereits an der Verzweigung 14 teilt, und die Hilfskühlmittelpumpe 13 abgeschaltet. Der hohe Durchflußwiderstand der abgeschalteten Hilfskühlmittelpumpe 13 verhindert einen Kühlmittelstrom durch die zur Hilfskühlmittelpumpe 13 führende Kühlmittelleitung 11, und die beiden aus den beiden Heizungs-Wärmetauschern 6, 8 austretenden Kühlmittelströme kehren gemeinsam über die Kühlmittelleitung 16 zur Brennkraftmaschine 2 zurück und bewirken deren schnellere Aufwärmung.

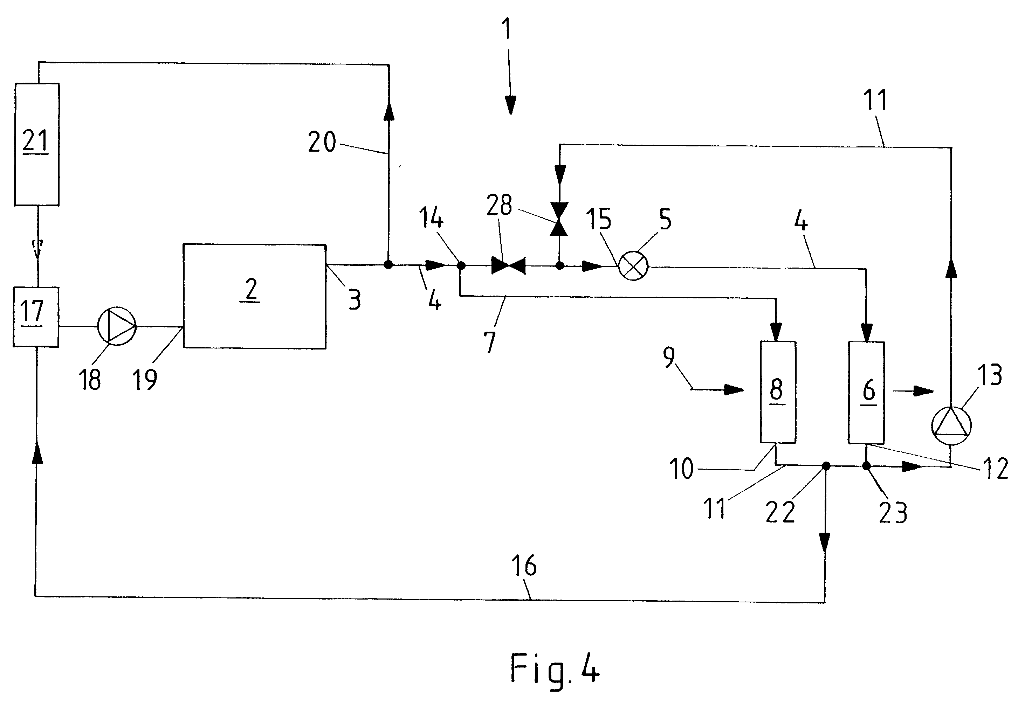

In der in Figur 4 dargestellten Variante ist gegenüber dem Ausführungsbeispiel gemäß Figur 3 das Drosselventil 27 durch ein Dreiwege-Ventil 28 ersetzt. Dessen erster Einlaß ist mit der von der Hilfskühlmittelpumpe 13 kommenden Kühlmittelleitung 11 verbunden. Der zweite Einlaß des Dreiwege-Ventils 28 ist an die von der Brennkraftmaschine 2 kommende Kühlmittelleitung 4 angeschlossen und der Auslaß des Dreiwege-Ventils 28 ist mit dem Kühlmitteleintritt 15 der Kühlmittel-Heizeinrichtung 5 verbunden. Die Wirkungsweise dieses Kühl- und Heizungskreislaufes entspricht dem aus Figur 3, wobei zur Erzielung einer optimalen Fahrgastraumheizung ein Kühlmittelstrom von der Brennkraftmaschine 2 zur Kühlmittel-Heizeinrichtung 5 unterbrochen ist und zur Erzielung einer optimalen Aufwärmung der Brennkraftmaschine 2 der Kühlmittelstrom von der Hilfskühlmittelpumpe 13 zur Kühlmittel-Heizeinrichtung 5 unterbrochen und diese mit der von der Brennkraftmaschine 2 kommenden Kühlmittelleitung 4 verbunden ist.

Sowohl das Drosselventil 27 als auch das Dreiwege-Ventil 28 können durch eine elektronische Motorsteuerung gesteuert werden.

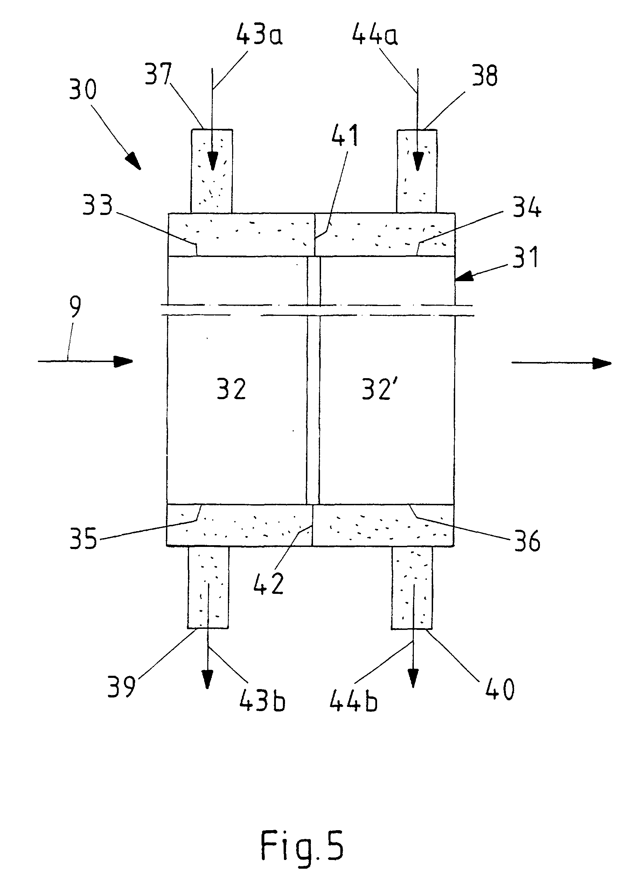

Figur 5 zeigt ein Ausführungsbeispiel eines erfindungsgemäßen Heizungs-Wärmetauschers 30, das zwei in einem Gehäuse 31 zusammengefaßte Wärmetauscherkerne 32 aufweist. Die Wärmetauscherkerne 32 liegen nebeneinander und sind gegeneinander wärmeisoliert, um eine Wärmeübertragung entgegen der Strömungsrichtung der Heizungsluft 9 zu verhindern. Die beiden Wärmetauscherkerne 32 sind auf zwei einander gegenüberliegenden Seiten des Gehäuses 31 an ihren Enden 33, 34, 35, 36 jeweils mit einer Gehäuseöffnung 37, 38, 39, 40 verbunden, wobei die Gehäuseöffnungen einer Seite jeweils durch eine Trenneinrichtung 41, 42 voneinander getrennt sind. Die in Figur 5 dargestellten Pfeile 43, 44 für den Kühlmittelstrom geben einen Einsatz in einem Kühl- und Heizungskreislauf 1 gemäß den Figuren 1 bis 4 wieder. Die beiden durch die Trenneinrichtung 41 getrennten Öffnungen 37, 38 dienen jeweils als Einlaß für getrennte Kühlmittelströme 43, 44, wobei der in Figur 5 rechte eintretende Kühlmittelstrom 44a die Kühlmittel-Heizeinrichtung 5 und den ersten Heizungs-Wärmetauscher 6 und der in Figur 5 linke Kühlmittelstrom 43a den zweiten Heizungs-Wärmetauscher 8 durchlaufen hat. Die beiden durch die Trenneinrichtung 42 getrennten, in Figur 5 unteren Öffnungen 39, 40 dienen jeweils als Auslaß für die getrennten Kühlmittelströme 43, 44, wobei der rechte austretende Kühlmittelstrom 44b ganz oder überwiegend zur Hilfskühlmittelpumpe 13 gelangt und der linke austretende Kühlmittelstrom 43b ganz oder überwiegend zur Brennkraftmaschine 2 zurückkehrt.

In einer bevorzugten Ausführungsform weist der erste Wärmetauscherkern 32' einen reduzierten Querschnitt der Anschlußrohre auf. Mit der elektrischen Hilfskühlmittelpumpe 13 ist dies ausführbar bzw. ausgleichbar und bewirkt einen geringeren Platzbedarf und einen geringeren Materialverbrauch für die zusätzliche Leitungsführung zu der Kühlmittel-Heizeinrichtung 5.

Obwohl bei einem erfindungsgemäßen Kühl- und Heizungskreislauf gerade keine kraftstoffbetriebenen Heizeinrichtungen notwendig sind, sind die erfindungsgemäßen Maßnahmen auch in Verbindung mit einer solchen Heizeinrichtung anwendbar. Da solche Heizeinrichtungen üblicherweise eine automatische Abschaltung zur Vermeidung von Überhitzung aufweisen, sind bei solchen Anwendungen zusätzliche Maßnahmen zur Vermeidung von Überhitzung nicht notwendig.

## Patentansprüche

1. Kühl- und Heizungskreislauf (1) für Kraftfahrzeuge mit einer durch Kühlmittel gekühlten Brennkraftmaschine (2), enthaltend:
- einen ersten Kühlmittel-Kreislauf enthaltend die Brennkraftmaschine (2), eine Kühlmittelpumpe (18) und einen zweiten Heizungs-Wärmetauscher (8);
- einen ersten Heizungs-Wärmetauscher (6), welcher über eine Kühlmittelzuleitung (4) parallel zum zweiten Heizungs-Wärmetauscher (8) an den ersten Kühlmittel-Kreislauf angeschlossen ist;
- einen zweiten Kühlmittel-Kreislauf, enthaltend den ersten Kühlmittel-Wärmetauscher (6), eine regelbare Hilfskühlmittelpumpe (13) sowie die Kühlmittelzuleitung (4) zum ersten Kühlmittel-Wärmetauscher (6);
- eine im zweiten Kühlmittel-Kreislauf angeordnete Kühlmittel-Heizeinrichtung (5);
- wobei vom Kühlmittelaustritt (10) des zweiten Heizungs-Wärmetauschers (8) aus eine Kühlmittelleitung (11) verläuft, an die zunächst die zur Brennkraftmaschine (2) zurückführende Kühlmittelleitung (16) angeschlossen ist und in die (11) danach der Kühlmittelaustritt (12) des ersten Heizungs-Wärmetauschers (6) einmündet und die (11) dann über die regelbare Hilfskühlmittelpumpe (13) zum Kühlmitteleintritt (15) der Kühlmittel-Heizeinrichtung (5) führt;
**dadurch gekennzeichnet, dass** die Kühlmittel-Heizeinrichtung (5) in der Kühlmittelzuleitung (4) zum ersten Kühlmittel-Wärmetauscher (6) angeordnet ist.

2. Kühl- und Heizungskreislauf nach Anspruch 1, **dadurch gekennzeichnet, daß** zwischen dem Anschluß (22) der zur Brennkraftmaschine (2) zurückführenden Kühlmittelleitung (16) und der Einmündung (23) des Kühlmittelaustritts (12) des ersten Heizungs-Wärmetauschers (6) ein Rückschlagventil (24) in die Kühlmittelleitung (11) geschaltet ist, das einen Kühlmittelstrom vom zweiten Heizungs-Wärmetauscher (8) zur Hilfskühlmittelpumpe (13) verhindert.

3. Kühl- und Heizungskreislauf nach Anspruch 1 oder 2, **dadurch gekennzeichnet, daß** zwischen der Hilfskühlmittelpumpe (13) und dem Kühlmitteleintritt (15) der Kühlmittel-Heizeinrichtung (5) ein Rückschlagventil (25) geschaltet ist, das im Ruhezustand der Hilfskühlmittelpumpe (13) einen Kühlmittelstrom über die Hilfskühlmittelpumpe (13) zu den Heizungs-Wärmetauschern (6, 8) bzw. zur Brennkraftmaschine (2) verhindert.

4. Kühl- und Heizungskreislauf nach Anspruch 1 oder 2, **dadurch gekennzeichnet, daß** eine Hilfskühlmittelpumpe (13) eingesetzt wird, die im Ruhezustand einen hohen Durchflußwiderstand aufweist.

5. Kühl- und Heizungskreislauf nach Anspruch 4, **dadurch gekennzeichnet, daß** zwischen der zum zweiten Heizungs-Wärmetauscher (8) führenden Verzweigung (14) und dem Kühlmitteleintritt (15) der Kühlmittel-Heizeinrichtung (5) die von der Hilfskühlmittelpumpe (13) kommende Kühlmittelleitung (11) in die von der Brennkraftmaschine (2) kommende Kühlmittelleitung (4) einmündet und zwischen der besagten Verzweigung (14) und der Einmündung (26) ein Drosselventil (27) geschaltet ist.

6. Kühl- und Heizungskreislauf nach Anspruch 4, **dadurch gekennzeichnet, daß** zwischen der zum zweiten Heizungs-Wärmetauscher (8) führenden Verzweigung (14) und der Kühlmittel-Heizeinrichtung (5) ein Dreiwege-Ventil (28) vorgesehen ist, dessen erster Einlaß mit der von der Brennkraftmaschine (2) kommenden Kühlmittelleitung (4), dessen zweiter Einlaß mit der von der Hilfskühlmittelpumpe (13) kommenden Kühlmittelleitung (11) und dessen Auslaß mit dem Kühlmitteleintritt (15) der Kühlmittel-Heizeinrichtung (5) verbunden ist.

7. Kühl- und Heizungskreislauf nach Anspruch 5 oder 6, **dadurch gekennzeichnet, daß** die Ventile (27, 28) elektronisch steuerbar sind.

## Claims

1. Cooling and heating circuit (1) for motor vehicles with an internal combustion engine (2) cooled by cooling medium containing:
- a first cooling medium circuit containing the internal combustion engine (1), a cooling medium pump (18) and a second heating heat exchanger (8),
- a first heating heat exchanger (6) which is connected by means of a cooling medium pipe (4) parallel to the second heating heat exchanger (8) to the first cooling medium circuit,
- a second cooling medium circuit containing the first cooling medium heat exchanger (6), an auxiliary cooling medium pump (13) which can be regulated as well as the cooling medium pipe (4) to the first cooling medium heat exchanger (6),
- a cooling medium heating device (5) arranged in the second cooling medium circuit,
wherein from the cooling medium outlet (10) of the second heating heat exchanger (8) a cooling medium pipe (11) runs, to which firstly the cooling medium pipe (16) leading back to the internal combustion engine (2) is connected and into which (11) afterwards the cooling medium outlet (12) of the first heating heat exchanger (6) runs and which (11) then leads via the auxiliary cooling medium pump (13) which can be regulated to the cooling medium inlet (15) of the cooling medium heating device (5),
**characterised in that** the cooling medium heating device (5) is arranged in the cooling medium pipe (4) to the first cooling medium heat exchanger (6).

2. Cooling and heating circuit according to claim 1 **characterised in that** between the connection (22) of the cooling medium pipe (16) leading back to the internal combustion engine (2) and the junction (23) of the cooling medium outlet (12) of the first heating heat exchanger (6) a non-return valve (24) is connected into the cooling medium pipe (11) which prevents a cooling medium flow from the second heating heat exchanger (8) to the auxiliary cooling medium pump (13).

3. Cooling and heating circuit according to claim 1 or 2 **characterised in that** between the auxiliary cooling medium pump (13) and the cooling medium inlet (15) of the cooling medium heating device (5) a non-return valve (25) is connected which in the state of rest of the auxiliary cooling medium pump (13) prevents a cooling medium flow via the auxiliary cooling medium pump (13) to the heating heat exchangers (6, 8) / to the internal combustion engine (2).

4. Cooling and heating circuit according to claim 1 or 2 **characterised in that** an auxiliary cooling medium pump (13) is used which in the state of rest has a high flow-through resistance.

5. Cooling and heating circuit according to claim 4 **characterised in that** between the branch (14) leading to the second heating heat exchanger (8) and the cooling medium inlet (15) of the cooling medium heating device (5) the cooling medium pipe (11) coming from the auxiliary cooling medium pump (13) runs into the cooling medium pipe (4) coming from the internal combustion engine (2) and a throttle valve (27) is connected between the said branch (14) and the junction (26).

6. Cooling and heating circuit according to claim 4 **characterised in that** between the branch (14) leading to the second heating heat exchanger (8) and the cooling medium heating device (5) a three-way valve (28) is provided whose first inlet is connected to the cooling medium pipe (4) coming from the internal combustion engine (2), whose second inlet is connected to the cooling medium pipe (11) coming from the auxiliary cooling medium pump (13) and whose outlet is connected to the cooling medium inlet (15) of the cooling medium heating device (5).

7. Cooling and heating circuit according to claim 5 or 6 **characterised in that** the valves (27, 28) can be electronically controlled.

## Revendications

1. Circuit (1) de refroidissement et de chauffage pour véhicules automobiles équipés d'un moteur à combustion interne (2) refroidi par réfrigérant, comprenant :
- un premier circuit de réfrigérant, comprenant le moteur à combustion interne (2), une pompe de réfrigérant (18) et un deuxième échangeur thermique (8) de chauffage ;
- un premier échangeur thermique (6) de chauffage qui, par l'intermédiaire d'une conduite (4) d'apport de réfrigérant, est raccordé au premier circuit de réfrigérant en parallèle avec le deuxième échangeur thermique (8) de chauffage ;
- un deuxième circuit de réfrigérant, comprenant le premier échangeur thermique (6) de réfrigérant, une pompe auxiliaire réglable (13) de réfrigérant et la conduite (4) d'apport de réfrigérant menant au premier échangeur thermique (6) de réfrigérant ;
- un dispositif (5) de chauffage de réfrigérant disposé dans le deuxième circuit de réfrigérant ;
- une conduite de réfrigérant (11) s'étendant à partir de la sortie de réfrigérant (10) du deuxième échangeur thermique (8) de chauffage, conduite (11) à laquelle est d'abord raccordée la conduite de réfrigérant (16) retournant au moteur à combustion interne (2), et conduite (11) dans laquelle débouche ensuite la sortie de réfrigérant (12) du premier échangeur thermique (6) de chauffage, et conduite (11) qui mène ensuite, par l'intermédiaire de la pompe auxiliaire réglable (13) de réfrigérant, à l'entrée de réfrigérant (15) du dispositif (5) de chauffage de réfrigérant ;
**caractérisé en ce que** le dispositif (5) de chauffage de réfrigérant est disposé dans la conduite (4) d'apport de réfrigérant menant au premier échangeur thermique (6) de réfrigérant.

2. Circuit de refroidissement et de chauffage selon la revendication 1, **caractérisé en ce qu'**une soupape antiretour (24) est montée dans la conduite de réfrigérant (11) entre le branchement (22) de la conduite de réfrigérant (16) retournant au moteur à combustion interne (2) et l'embouchure (23) de la sortie de réfrigérant (12) du premier échangeur thermique (6) de chauffage, soupape qui empêche un flux de réfrigérant depuis le deuxième échangeur thermique (8) de chauffage vers la pompe auxiliaire (13) de réfrigérant.

3. Circuit de refroidissement et de chauffage selon la revendication 1 ou 2, **caractérisé en ce qu'**une soupape antiretour (25) est montée entre la pompe auxiliaire (13) de réfrigérant et l'entrée de réfrigérant (15) du dispositif (5) de chauffage de réfrigérant, soupape qui empêche, à l'état de repos de la pompe auxiliaire (13) de réfrigérant, un flux de réfrigérant par l'intermédiaire de la pompe auxiliaire (13) de réfrigérant vers les échangeurs thermiques (6, 8) de chauffage ou vers le moteur à combustion interne (2).

4. Circuit de refroidissement et de chauffage selon la revendication 1 ou 2, **caractérisé en ce qu'**on utilise une pompe auxiliaire (13) de réfrigérant qui présente une haute résistance à la circulation à l'état de repos.

5. Circuit de refroidissement et de chauffage selon la revendication 4, **caractérisé en ce que** la conduite de réfrigérant (11) provenant de la pompe auxiliaire (13) de réfrigérant débouche dans la conduite (4) de réfrigérant provenant du moteur à combustion interne (2) entre la dérivation (14) menant au deuxième échangeur thermique (8) de chauffage et l'entrée de réfrigérant (15) du dispositif (5) de chauffage de réfrigérant, et **en ce qu'**une soupape d'étranglement (27) est montée entre la dérivation précitée (14) et l'embouchure (26).

6. Circuit de refroidissement et de chauffage selon la revendication 4, **caractérisé en ce qu'**une soupape (28) à trois voies est prévue entre la dérivation (14) menant au deuxième échangeur thermique (8) de chauffage et le dispositif (5) de chauffage de réfrigérant, soupape dont la première entrée est reliée à la conduite (4) de réfrigérant provenant du moteur à combustion interne (2), dont la deuxième entrée est reliée à la conduite de réfrigérant (11) provenant de la pompe auxiliaire (13) de réfrigérant, et dont la sortie est reliée à l'entrée de réfrigérant (15) du dispositif (5) de chauffage de réfrigérant.

7. Circuit de refroidissement et de chauffage selon la revendication 5 ou 6, **caractérisé en ce que** les soupapes (27, 28) peuvent être commandées électroniquement
